# EUROPÄISCHE PATENTANMELDUNG

(11) **EP 0 923 233 A2**
(43) Veröffentlichungstag der Anmeldung: **16.06.1999**
(21) Anmeldenummer: 98204176.6
(22) Anmeldetag: 08.12.1998
(51) Int. Cl.: H04N 5/262

(54) **Anordnung zur Bearbeitung von Video-Daten**

(30) Priorität: 12.12.1997 DE 19755273
(71) Anmelder: Philips Patentverwaltung GmbH, 22335 Hamburg (DE); Koninklijke Philips Electronics N.V., 5621 BA Eindhoven (NL)
(72) Erfinder: Hasenzahl, Sieghard, Philips Patentverwaltung GmbH, 22335 Hamburg (DE); Seitz, Martin, Philips Patentverwaltung GmbH, 22335 Hamburg (DE); Buettner, Lutz, Philips Patentverwaltung GmbH, 22335 Hamburg (DE); Rüffer, Peter, Philips Patentverwaltung GmbH, 22335 Hamburg (DE); Maas, Elmar, Philips Patentverwaltung GmbH, 22335 Hamburg (DE); Ernst, Rolf, Philips Patentverwaltung GmbH, 22335 Hamburg (DE)
(74) Vertreter: von Laue, Hanns-Ulrich, Dipl.-Ing.

(57) **Zusammenfassung**

Bei einer Anordnung zur Bearbeitung von digitalen Video-Daten ist zum möglichst universellen Einsatz der Anordnung und zum schnellen Datenaustausch zwischen Komponenten innerhalb der Anordnung vorgesehen, daß die Anordnung (1) wenigstens einen Video-Daten-Rechner (3, 4, 5, 6), wenigstens eine Video-Daten-Schnittstelle (7, 8) und wenigstens einen Standardrechner (13) und/oder eine Video-Hardware-Komponente (10) aufweist, zwischen denen Video-Daten über einen Fibre-Channel (12) austauschbar sind, und daß wenigstens die Video-Daten-Rechner (3, 4, 5, 6) und die Video-Daten-Schnittstelle(n) (7, 8) mittels wenigstens eines Steuerrechners (2) über einen Ethernet-Bus (14) gesteuert werden.

## Beschreibung

Die Erfindung betrifft eine Anordnung zur Bearbeitung von digitalen Video-Daten. Bei derartigen Anordnungen besteht aufgrund der hohen Datenmenge der Daten das Problem, daß insbesondere eine Verarbeitung in Echtzeit Probleme aufwirft. Dies einerseits wegen der Bearbeitung, insbesondere aber auch wegen des Austausches von Daten innerhalb der Anordnung zwischen verschiedenen Komponenten.

Bei Lösungen nach dem Stande der Technik treten insbesondere dann Probleme auf, wenn in einer Anordnung Komponenten verschiedener Art miteinander kombiniert werden sollen, beispielsweise Video-Daten-Schnittstellen, Video-Hardware-Komponenten, die bestimmte dedizierte Verarbeitungen der Video-Daten vornehmen, universell einsetzbare Video-Daten-Rechner sowie Standardrechner und Steuerrechner.

Es ist Aufgabe der Erfindung, eine Anordnung der eingangs genannten Art mit einem verbesserten Datenaustausch zwischen deren Komponenten anzugeben.

Diese Aufgabe wird erfindungsgemäß dadurch gelöst, daß die Anordnung wenigstens einen Video-Daten-Rechner, wenigstens eine Video-Daten-Schnittstelle und wenigstens einen Standardrechner und/oder eine Video-Hardware-Komponente aufweist, zwischen denen Video-Daten über einen Fibre-Channel austauschbar sind, und daß wenigstens die Video-Daten-Rechner und die Video-Daten-Schnittstelle(n) mittels wenigstens eines Rechners, insbesondere des Steuerrechners, über eine Ethernet-Verbindung oder eine RS-422-Verbindung gesteuert werden.

Für einen einerseits möglichst universellen Einsatz einer Anordnung zur Bearbeitung von digitalen Video-Daten und andererseits zur möglichst schnellen Bearbeitung der Video-Daten in Echtzeit sind in der Anordnung Video-Daten-Rechner vorgesehen, welche universell programmierbar sind und, gegebenenfalls parallel, Video-Daten verarbeiten. Zur Zuführung externer Video-Daten und zur Weiterleitung bearbeiteter Video-Daten ist wenigstens eine Video-Daten-Schnittstelle vorgesehen. Ferner wird wenigstens ein Standardrechner eingebunden, der möglichst nicht modifiziert werden soll und bei dem es sich beispielsweise um eine Workstation oder einen Personalcomputer handeln kann. Spezielle Video-Hardware-Komponenten sind dazu vorgesehen, diesen jeweils fest zugeordnete Bearbeitungsfunktionen zu übernehmen, wie beispielsweise Überblenden, Mischen, Farbstanzen oder Ähnliches. Diese Video-Hardware-Komponenten sind jeweils nur für den dedizierten Verwendungszweck geeignet.

Zum möglichst schnellen Datenaustausch zwischen diesen Komponenten ist erfindungsgemäß der sogenannte Fibre-Channel vorgesehen. Es handelt sich hierbei um ein an sich bekanntes Verbindungskonzept zum Austausch didgtaler Daten, das beispielsweise in "Fibre Channel: Connection to the Future, The Fibre Channel Association, 1994, ISBN: 1-878707-19-1" veröffentlicht ist. Über den Fibre-Channel werden die digitalen Video-Daten zwischen den Video-Daten-Rechnern, der Video-Daten-Schnittstelle, dem Standardrechner und den Video-Hardware-Komponenten ausgetauscht. Da der Fibre-Channel eine Datenrate von über 1 Gigabit pro Sekunde gestattet, kann der Datenaustausch der Video-Daten mit einer solchen Geschwindigkeit erfolgen, daß auch eine Echtzeitverarbeitung und -bearbeitung der Video-Daten mittels der Anordnung ermöglicht wird.

Da zur bestimmungsgemäßen Verarbeitung bzw. Bearbeitung der digitalen Video-Daten wenigstens einige der Komponenten, insbesondere die Video-Daten-Rechner und die Video-Daten-Schnittstellen zu steuern sind, ist darüber hinaus eine spezielle Steuerverbindung über eine Ethernet-Verbindung zwischen diesen Elementen und einem Steuerrechner vorgesehen. Das Ethernet-Bus-Konzept ist ebenfalls an sich bekannt und beispielsweise in "IEEE 802.3: Carrier Sense Multiple Access with Collision detection, New York, IEEE 1985a" veröffentlicht. Durch den Einsatz des Ethernets zur Steuerung wenigstens einiger Komponenten und des Fibre-Channel Konzeptes zum Datenaustausch zwischen den Komponenten gelingt es, die Steuerung und den Datenaustausch innerhalb der Anordnung so zu gestalten, daß eine Echtzeit-Verarbeitung von Video-Daten mittels der Anordnung gelingt.

Das Datenaustauschkonzept in der Anordnung gestattet es, einerseits Standard-Rechner mit Standard-Schnittstellen einzubinden. Die gewählten Schnittstellen bzw. Verbindungskonzepte sind bekannt, so daß hierfür erforderliche Adapterkarten,Treiber, Protokolle und Ähnliches verfügbar sind. Der Anwender hat die Möglichkeit, durch entsprechende Steuerung bestimmter Applikationen, beispielsweise Mischung, Überblendung, Rauschreduzierung, Farbstanzung oder andere Videoeffekte auszuwählen. Die Übertragung der Video-Daten über den Fibre-Channel gestattet eine schnellere Übertragung als Buskonzepte. Sie ist ferner unabhängig vom Video-Standard, beispielsweise dem Bildformat oder Darstellungsvarianten.

Mittels einer vorteilhaften Ausgestaltung der Erfindung nach Anspruch 2 wird eine zusätzliche Verbindung zwischen dem Steuerrechner und den Video-Daten-Rechnern einerseits und den Video-Daten-Schnittstellen andererseits mittels des im PC-Bereich bekannten PCI-Bus geschaffen. Damit kann zwischen diesen Komponenten über diesen weit verbreiteten Bus ein zusätzlicher Datenaustausch vorgenommen werden, der insbesondere dem Austausch von Steuerdaten dient. Bei dem PCI-Bus handelt es sich um einen im PC-Bereich verbreiteten Bus, der beispielsweise in der "PCI (Peripheral Component Interconnect) Local Bus Specification 2.1, PCI Special Interest Group, 1995" beschrieben ist.

Die gemäß Anspruch 3 vorgesehene Ausgestaltung der Erfindung gestattet es, Hardware-Komponenten, die an sich keine Interface-Anordnung und insbesondere keine solche für den Fibre-Channel haben, in das Datenaustauschkonzept der Anordnung einzubinden. Dazu wird eine Interface-Anordnung zwischen die jeweils anzukoppelnde Hardware-Komponente und den Fibre-Channel geschaltet.

Da aufgrund des Datenaustauschkonzeptes innerhalb der Anordnung eine sehr schnelle Verarbeitung von Video-Daten ermöglicht wird, kann gemäß der vorteilhaften Ausgestaltung gemäß Anspruch 4 eine parallele Verarbeitung von Video-Daten in mehreren Video-Daten-Rechnern erfolgen, da die hierfür notwendige Datenmenge innerhalb der Anordnung und nach außen transportiert werden kann.

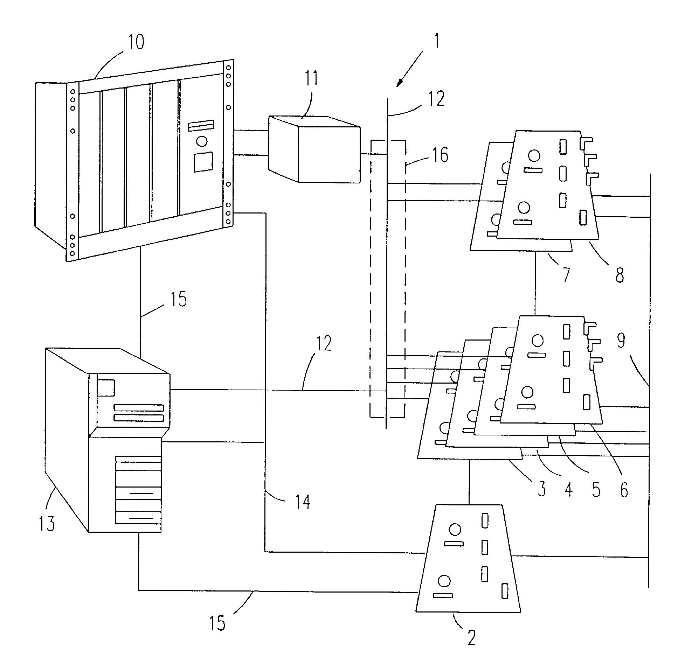

Nachfolgend wird anhand der einzigen Figur der Zeichnung ein Ausführungsbeispiel der Erfindung näher erläutert.

Die Figur zeigt in schematischer Darstellung eine Anordnung 1 zur Bearbeitung von digitalen Video-Daten mit dem erfindungsgemäßen Datenaustauschkonzept.

In der Anordnung 1 ist ein Steuerrechner 2 vorgesehen, der insbesondere dazu dient, weitere vorgesehene Komponenten zu steuern.

In dem Ausführungsbeispiel gemäß der Figur sind vier Video-Daten-Rechner 3, 4, 5 und 6 vorgesehen, die dazu dienen, Video-Daten zu bearbeiten. Die Rechner können entsprechend der gewünschten Art der Verarbeitung programmiert werden. Ferner sind in der Figur zwei Video-Daten-Schnittstellen 7 und 8 angedeutet, die dazu dienen, extern zur Verfügung gestellte Video-Daten der Anordnung zuzuführen bzw. innerhalb der Anordnung verarbeitete Video-Daten wieder nach außen zu leiten.

Der Steuerrechner 2 ist über eine PCI-Busverbindung 9 mit wenigstens einigen der Video-Daten-Rechner 3, 4, 5, 6 sowie der Video-Daten-Schnittstellen 7 und 8 verbunden. Über diesen Bus kann insbesondere eine Steuerung der Video-Daten-Rechner 3, 4, 5 und 6 sowie der Video-Daten-Schnittstellen 7 und 8 vorgenommen werden.

In der Darstellung gemäß der Figur ist ferner eine Video-Hardware-Komponente 10 angedeutet. Es können mehrere derartige Video-Hardware-Komponenten vorgesehen sein. Bei derartigen Video-Hardware-Komponenten handelt es sich um solche, die bestimmten Verarbeitungsarten fest zugeordnet sind, die also hardwaremäßig jeweils für einen bestimmten Einsatzzweck ausgelegt sind. Hierbei kann es sich beispielsweise um ein Mischen von Video-Daten, um eine Rauschbefreiung von Video-Daten oder um ein Farbstanzen zwischen Video-Daten handeln.

Die Steuerung der Video-Hardware-Komponente(n) 10 erfolgt über eine RS-422-Verbindung 15 oder eine Ethernet-Verbindung 14 vom Steuerrechner 2 aus.

Die in dem Ausführungsbeispiel vorgesehene Video-Hardware-Komponente 10 ist über eine Interface-Anordnung 11, bei der es sich um eine Video-daten-Schnittstelle handelt, an einen Fibre-Channel 12 gekoppelt.

In der Anordnung gemäß dem Ausführungsbeispiel ist ferner ein Standard-Rechner 13 vorgesehen, bei dem es sich beispielsweise um eine Workstation handeln kann. Dieser Standard-Rechner kann entsprechend der variablen Programmierung universelle Bearbeitungsaufgaben innerhalb der Anordnung übernehmen. der Standard-Rechner 13 kann ggf. auch als Steuerechner eingesetzt werden, so daß der gesonderte Steuerechner 2 entfällt.

Ist dieser jedoch vorgesehen, its zwischen dem Steuerrechner 2 der Anordnung und dem Standard-Rechner 13 sowie der Video-Hardware-Komponente 10 eine RS-422-Verbindung 15 vorgesehen, welche der Steuerung der Video-Hardware-Komponente 10 und des Standard-Rechners 13 mittels des Steuerrechners 2 dient. Statt der RS-422-Verbindung 15 kann auch zwischen dem Steuerechner 2 und der Video-Hardware-Komponente 10 die Ethernet-Bus-Verbindung 14 für Steuerzewcke eingesetzt werden; dann kann ggf. die RS-422-Verbindung entfallen.

Ferner kann zusätzlich zwischen diesen Komponenten ebenfalls für Steuerungszwecke eine in der Figur nicht angedeutete JTAG-Verbindung vorgesehen sein, die insbesondere für die Entwicklung von Applikationen für die Anordnung dienlich ist.

Zwischen den Video-Daten-Rechnern 3, 4, 5 und 6, den Video-Daten-Schnittstellen 7 und 8 sowie der Video-Hardware-Komponente 10 über die Interface-Anordnung 11 und dem Standard-Rechner 13 ist die Fibre-Channel-Verbindung 12 zu möglichst schnellen Datenaustausch zwischen diesen Komponenten vorgesehen. Die Fibre-Channel-Verbindung 12 ist schneller als bekannte Buskonzepte und erlaubt hohe Datenraten, die oberhalb 1 Gigabit pro Sekunde liegen können.

Die Verbindung zwischen dem Steuerrechner 2 und den Video-Daten-Rechnern 3, 4, 5 und 6 sowie den Video-Daten-Schnittstellen 7 und 8 kann vorteilhaft über den PCI-Bus 9 erfolgen, da diese Komponenten gegebenenfalls in einem Rechnergehäuse installiert sind und der PCI-Bus für derartige Zwecke optimiert ist. Da der PCI-Bus eine Standard-Bus-Verbindung geworden ist, sind hierfür erforderliche Komponenten frei erhältlich.

Über den Fibre-Channel 12 vorzunehmende Verbindungen zwischen Komponenten der Anordnung können ggf. mittels einer Umschaltvorrichtung 16 hergestellt werden.

Die zwischen dem Steuerrechner 2 und dem Standardrechner 13 sowie der Video-Hardware-Komponente 10 ggf. vorgesehene JTAG-Verbindung ist ebenfalls weit verbreitet und wird durch entsprechende Komponenten unterstützt.

Im Gesamtkonzept ist durch die verschiedenen Verbindungen zwischen den Komponenten innerhalb der erfindungsgemäßen Anordnung einerseits ein sehr schneller Datenaustausch und andererseits eine universelle Steuerung der Komponenten möglich. Es gelingt damit eine Video-Daten-Verarbeitung in Echtzeit bei gleichzeitig universellen Einsatzmöglichkeiten der Anordnung.

## Patentansprüche

1. Anordnung zur Bearbeitung von digitalen Video-Daten, dadurch gekennzeichnet, daß die Anordnung (1) wenigstens einen Video-Daten-Rechner (3, 4, 5, 6), wenigstens eine Video-Daten-Schnittstelle (7, 8) und wenigstens einen Standardrechner (13) und/oder eine Video-Hardware-Komponente (10) aufweist, zwischen denen Video-Daten über einen Fibre-Channel (12) austauschbar sind, und daß wenigstens die Video-Daten-Rechner (3, 4, 5, 6) und die Video-Daten-Schnittstelle(n) (7, 8) mittels eines Rechners, insbesondere des Standardrechners (13), über eine Ethernet-Verbindung (14) oder eine RS-422 Verbindung gesteuert werden.

2. Anordnung nach Anspruch 1, dadurch gekennzeichnet,
daß der Steuerrechner (2) über einen PCI-Bus (9) mit dem Video-Daten-Rechner (3, 4, 5, 6) und der Video-Daten-Schnittstelle (7, 8) verbunden ist

3. Anordnung nach Anspruch 1, dadurch gekennzeichnet,
daß die Video-Hardware-Komponente (10) mittels einer Interface-Anordnung (11) mit dem Fibre-Channel (12) gekoppelt ist.

4. Anordnung nach Anspruch 1, dadurch gekennzeichnet,
daß wenigstens zwei parallel arbeitende Video-Daten-Rechner (3, 4, 5, 6) vorgesehen sind, die jeweils auf zugeordnete Video-Daten zugreifen, diese einem Rechenprozeß unterwerfen und als bearbeitete Video-Daten wieder ausgeben.

5. Anordnung nach Anspruch 1, dadurch gekennzeichnet,
daß die Video-Daten aus wenigstens zwei Video-Daten-Signalen stammen.

6. Anordnung nach Anspruch 1, dadurch gekennzeichnet,
daß Verbindungen über den Fibre-Channel (12) mittels einer Umschaltvorrichtung (16) herstellbar sind.

7. Anordnung nach Anspruch 1, dadurch gekennzeichnet,
daß jede der Video-Hardware-Komponenten (10) jeweils zum Mischen, Überblenden, Aufbereiten, Speichern oder Farbstanzen eines oder mehrerer Video-Daten-Signale vorgesehen ist.

8. Anordnung nach Anspruch 1, dadurch gekennzeichnet,
daß es sich bei dem Standardrechner (13) um eine Workstation oder einen Personalcomputer handelt.
